# NOUVEAU FASCICULE DE BREVET EUROPEEN

(11) **EP 0 610 105 B2**
(45) Date de publication et mention de la décision concernant l'opposition: **20.12.2000**
(45) Mention de la délivrance du brevet: 17.12.1997
(21) Numéro de dépôt: 94400037.1
(22) Date de dépôt: 06.01.1994
(51) Int. Cl.: G01D 11/28

(54) **Aiguille de cadran indicateur**
Zeigerinstrument
Pointer instrument

(30) Priorité: 02.02.1993 FR 9301092
(43) Date de publication de la demande: 10.08.1994
(73) Titulaire: SOCIETE D'APPLICATIONS GENERALES D'ELECTRICITE ET DE MECANIQUE SAGEM, 75783 Paris Cédex 16 (FR)
(72) Inventeur: Metais, Derry, F-95650 Genicourt (FR)
(74) Mandataire: Bloch, Gérard

(56) Documents cités:
- EP-A- 0 295 165
- EP-A- 0 301 439
- EP-A- 0 411 799
- EP-A- 0 479 358
- EP-A- 0 497 664
- DE-A- 3 628 540
- DE-A- 3 834 229
- DE-A- 4 007 379
- DE-A- 4 015 170
- DE-C- 3 840 542
- US-A- 4 044 708

## Description

La présente invention concerne une aiguille de cadran comportant un bras indicateur, s'étendant depuis une tête agencée pour recevoir de la lumière par le dessous et éclairer le bras, et des moyens d'homogénéisation de l'éclairage le long du bras.

Comme application d'une telle aiguille, on peut citer les tableaux de bord, par exemple ceux des véhicules automobiles.

On connaît déjà des aiguilles du type mentionné ci-dessus qui comportent, comme moyens d'homogénéisation, une plaquette de filtrage disposée dans la tête d'aiguille et de nature opacifiante pour filtrer la lumière arrivant par le dessous de la tête et diminuer la luminance. Le moulage de telles aiguilles est délicat. Le logement de réception de plaquette implique un moule à plusieurs tiroirs, sans parler de la difficulté de l'introduction de la plaquette.

Un système conformément au préambule de la revendication 1 est décrit dans le document US-A-4 044 708.

La présente invention vise à proposer une aiguille de cadran à éclairage homogène de réalisation simple.

A cet effet, elle concerne une aiguille du type mentionné ci-dessus, caractérisée par le fait qu'une couche filtrante d'homogénéisation est appliquée sur le dessus du bras formant un capot d'aiguille intégré, c'est-à-dire du côté présenté à la vue de l'utilisateur.

L'application d'une couche filtrante est naturellement beaucoup plus simple que l'introduction d'une plaquette intérieure.

Une couche de couleur nocturne est disposée contre la couche filtrante, destinée à être éclairée à travers cette couche filtrante, couche de couleur nocturne qui est, de préférence, disposée entre la couche filtrante et une couche de couleur diurne, sur laquelle vient directement frapper la lumière du jour.

La couche filtrante est appliquée par sérigraphie sur un support intermédiaire, par exemple un film en polycarbonate ou méthacrylate, lui-même appliqué sur le dessus du bras, du côté de la couche filtrante, avec éventuellement, d'une part, interposition de la couche de couleur nocturne, directement appliquée sur le support aussi par sérigraphie, et, d'autre part, application, également par sérigraphie, de la couche de couleur diurne directement sur le support du côté opposé à celui de la couche de couleur nocturne, le tout formant un stratifié lumineux à couche filtrante inférieure plaquée sur le bras d'aiguille.

Le stratifié formant un capot d'aiguille intégré est surmoulé sur le bras d'aiguille pour le recouvrir sur le dessus et latéralement et procurer ainsi un effet de style à la manière d'un barreau lumineux.

La couche filtrante est une couche tramée, et serigraphiée.

L'invention sera mieux comprise à l'aide de la description suivante de plusieurs formes de réalisation de l'aiguille de l'invention, en référence au dessin annexé, sur lequel
- la figure 1 est une vue latérale d'une première forme de réalisation de l'aiguille de l'invention, avec un stratifié lumineux ;
- la figure 2 est une vue latérale du stratifié de l'aiguille de la figure 1 ;
- la figure 3 est vue de dessus d'une variante de réalisation du stratifié lumineux pour une deuxième forme de réalisation d'aiguille, avant surmoulage ;
- la figure 4 est une vue de dessus du stratifié de la figure 3, après surmoulage ;
- la figure 5 est une vue en coupe, à plus grande échelle, du bras d'aiguille avec le stratifié de la figure 4 et
- la figure 6 est une vue latérale d'une troisième forme de réalisation de l'aiguille de l'invention, avec des couches imprimées.

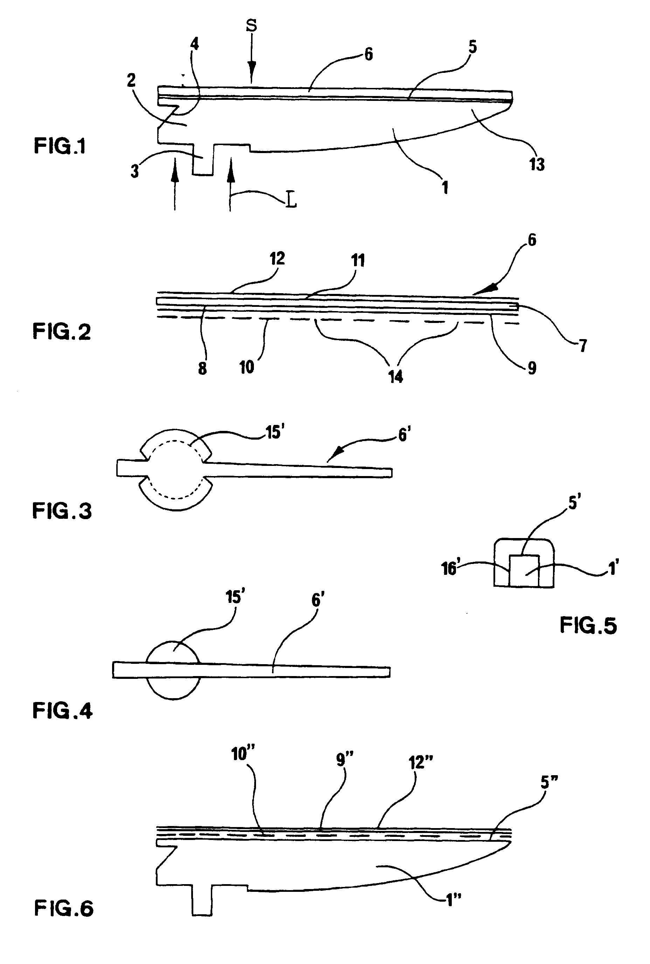

L'aiguille de cadran indicateur, ici d'un tableau de bord de véhicule automobile, de la figure 1 comporte un bras 1 s'étendant depuis une tête 2, elle-même prolongée vers l'avant, vers le bas sur la figure, par un moyeu 3. La tête 2 est conformée pour recevoir de la lumière L par le dessous et éclairer le bras 1. A cet effet, sur la tête 2 est notamment ménagé un pan de réflexion 4. Sur le dessus 5 du bras 1, tourné en fait vers l'arrière, à la vue de l'utilisateur (le conducteur), est appliqué un stratifié lumineux 6 à couche filtrante d'homogénéisation de l'éclairage du bras.

Le stratifié 6 (figure 2) comporte un support 7, ici un film en polycarbonate, sur un côté 8 duquel, en l'espèce celui qui est tourné vers le bras, sont appliquées, par sérigraphie, une couche 9 de couleur nocturne (par exemple ocre) puis une couche filtrante 10 d'homogénéisation. Sur le côté opposé 11 du support 7, est appliquée, toujours par sérigraphie, une couche 12 de couleur diurne. La nuit, la couche nocturne 9 est éclairée à travers la couche filtrante 10, alors que, le jour, la lumière S frappe directement la couche diurne 12.

La couche filtrante 10 est une couche tramée dont les ouvertures 14 sont resserrées près de la tête d'aiguille 2 et s'élargissent progressivement vers l'extrémité d'aiguille 13.

L'exemple des figures 3-5 concerne une aiguille de faible longueur, par ailleurs identique à celle des figures 1 et 2, dont le stratifié 6' est très similaire à celui des figures 1, 2, mais qui est conformé pour être surmoulé sur le bras d'aiguille 1' et former un capot d'aiguille intégré 15'.

A cet effet, on dépose le stratifié sur le fond d'un moule avant d'y injecter la matière du bras. Le stratifié recouvre le dessus 5' et les parois latérales 16' du bras. Grâce à cela, on obtient l'équivalent d'un barreau lumineux qui présente l'avantage d'éliminer tout effet de parallaxe.

Les aiguilles des figures 1-5 présentent un éclairage particulièrement homogène sur toute la longueur de leur bras. Les stratifiés 6, 6' assurent simultanément la triple fonction de coloration nocturne, coloration diurne et homogénéisation.

L'aiguille de la figure 6 est très similaire aux précédentes, à la différence près que le stratifié lumineux a été remplacé par trois couches, ici d'une encre séchant aux rayons ultra-violet, directement imprimées sur le dessus 5'' du bras 1'', à savoir, une couche filtrante d'homogénéisation 10'', une couche de couleur nocturne 9'' et une couche de couleur diurne 12". Ces trois couches ont été imprimées par tampo-impression à l'aide d'un tampon encreur.

La couche filtrante 10'' est aussi une couche tramée. On peut l'appliquer de façon unitaire par impression unique d'une trame d'encre ou encore par impression multiple de plusieurs aplats opacifiants respectivement sur des zones différentes mais se recouvrant mutuellement en partie.

## Revendications

1. Aiguille de cadran comportant un bras indicateur (1'), s'étendant depuis une tête (2) agencée pour recevoir de la lumière (L) par le dessous et éclairer le bras, une couche filtrante d'homogénéisation de l'éclairage le long du bras, et une couche de couleur (9) caractérisée par le fait que
- cette couche filtrante d'homogénéisation est tramée (10),
- que la couche de couleur est une couche de couleur nocturne (9), disposée contre la couche filtrante (10) et est destinée à être éclairée à travers la couche filtrante,
- et en ce que les couches sont appliquées par sérigraphie sur un support intermédiaire (7) formant avec les les couches (10,9) un stratifié lumineux (6') surmoulé sur le dessus (5') du bras (1') de l'aiguille et formant un capot d'aiguille intégré (15').

2. Aiguille de cadran selon la revendication 1 caractérisée par le fait que les ouvertures de la trame sont resserrées de la tête d'aiguille (2) et s'élargissent progressivement vers l'extrémité de l'aiguille (13).

## Claims

1. Dial needle comprising an indicator arm (1') extending from a head (2) arranged to receive light (L) from below and to illuminate the arm, a filtering layer for homogenizing the illumination along the arm, and a colour layer (9),
characterized in that
- this filtering homogenizing layer is a screen layer (10),
- the colour layer is a nocturnal colour layer (9), disposed against the filtering layer (10) and is intended to be illuminated through the filtering layer,
- and in that the layers are applied by serigraphy onto an intermediate support (7) which, with the layers (10, 9), forms a luminous stratified structure (6') overmoulded on the upper side (5') of the arm (1') of the needle and forming an integrated needle cap (15').

2. Dial needle according to Claim 1, characterized in that the openings in the screen are closely spaced by the needle head (2) and gradually widen towards the end of the needle (13).

## Patentansprüche

1. Skalenzeiger mit einem Anzeigerarm (1'), der sich von einem Kopf (2) aus erstreckt, der dazu bestimmt ist, Licht (L) von unten zu erhalten und den Arm zu beleuchten, einer filternden Schicht zur Homogenisierung der Beleuchtung entlang des Arms und einer Farbschicht (9), dadurch gekennzeichnet, daß
- diese filternde Schicht zur Homogenisierung eine Rasterschicht (10) ist,
- die Farbschicht eine Nachtfarbschicht(9) ist, die gegen die filternde Schicht (10) angeordnet und dazu bestimmt ist, durch diese filternde Schicht hindurch beleuchtet zu werden,
- und dadurch, daß die Schichten serigraphisch auf einen Zwischenträger (7) aufgebracht sind, der mit den Schichten (10, 9) einen leuchtende Schichtung (6') bildet, die auf die Oberseite (5') des Arms (1') aufgebracht ist und eine integrierte Zeigerabdeckung (15') bildet.

2. Skalenzeiger nach Anspruch 1, dadurch gekennzeichnet, daß die Rasteröffnungen am Zeigerkopf (2) klein sind und sich zum Zeigerende (13) hin progressiv erweitern.
